# FASCICULE DE BREVET EUROPEEN

(11) **EP 0 206 912 B1**
(45) Date de publication et mention de la délivrance du brevet: **31.03.1993**
(21) Numéro de dépôt: 86401286.9
(22) Date de dépôt: 13.06.1986
(51) Int. Cl.: G01S 3/78, F41G 7/30

(54) **Système pour la localisation d'un mobile**
System zur Bestimmung der Position eines bewegten Ziels
Position finding system for a moving object

(30) Priorité: 17.06.1985 FR 8509158
(43) Date de publication de la demande: 30.12.1986
(73) Titulaire: AEROSPATIALE Société Nationale Industrielle, 75781 Paris Cédex 16 (FR)
(72) Inventeur: Grenier, Gilles, F-94240 L'Hay-Les-Roses (FR); Merle, Jean-Pierre, F-91400 Orsay (FR); Maffert, Jérôme, F-78000 Versailles (FR); Roze des Ordons, Jacques, F-91600 Savigny (FR)
(74) Mandataire: Bonnetat, Christian

(56) Documents cités:
- FR-A- 2 334 079
- GB-A- 2 122 833
- US-A- 3 761 180
- US-A- 4 027 837
- US-A- 4 424 943

## Description

La présente invention concerne un système pour la localisation d'un mobile. Quoique non exclusivement, elle est particulièrement appropriée à la localisation et au guidage de missiles, par exemple de missiles anti-char.

Pour localiser un missile par rapport à un axe, qui constitue par exemple la ligne de visée d'un système d'arme, on connaît déjà un système comportant un détecteur optique, par exemple une simple lunette de visée, disposé à poste fixe et coopérant avec un émetteur optique, par exemple un traceur lumineux, lié audit mobile. Quoique monté à poste fixe, le détecteur optique est orientable ; il peut être ainsi dirigé à chaque instant vers l'émetteur optique. Il en résulte donc que l'orientation instantanée du détecteur optique par rapport à un axe de référence est représentative de la position dudit missile par rapport à cet axe.

Un tel système de localisation connu présente donc l'inconvénient que le détecteur optique doit être orienté en continu pour suivre le missile, ce qui nécessite l'action d'un opérateur pendant toute la durée du vol du missile. De plus, on est obligé de prévoir des capteurs sur ledit détecteur optique, afin que son orientation puisse engendrer des signaux électriques représentatifs de la position du missile et susceptibles d'être utilisés pour le guidage de celui-ci.

Certains systèmes d'arme, dits de seconde génération, assurent la localisation du missile et son guidage par rapport à l'axe de visée défini par le tireur.

La liaison entre le poste de tir et le missile est établie entre un détecteur harmonisé avec la ligne de visée et une source optique liée au missile dont la signature doit être caractéristique.

La caractéristique de cette signature peut être :
- soit le spectre d'émission de la source,
- soit la puissance émise par rapport au signal parasite correspondant au fond,
- soit la fréquence d'émission de la source,
- soit la phase d'émission de la source.

Les systèmes de localisation connus ne permettent pas d'utiliser simultanément l'ensemble des critères de reconnaissance définis précédemment.

Par ailleurs, par les documents US-A-4 424 943 et FR-A-2 334 079, on connaît déjà un système pour la localisation d'un mobile par rapport à un axe, comportant un détecteur photosensible disposé à poste fixe et associé à une optique observant l'environnement dudit axe dans lequel ledit mobile est susceptible de se déplacer, ainsi qu'un émetteur optique lié audit mobile et engendrant des éclats lumineux.

Dans le brevet FR-A-2 334 079, le détecteur photosensible peut être une mosaïque de détecteurs, mais la balise est continue.

Quant à lui, le document US-A-4 424 943 décrit un système de localisation pour missile comportant une caméra infrarouge. Cette caméra infrarouge fonctionne en continu et observe une balise portée par le missile. Une telle balise peut être intermittente ou non. Lorsqu'elle est intermittente, son fonctionnement est synchronisé à celui de la caméra. Un tel asservissement ne peut donc qu'être périodique.

La présente invention a pour objet de perfectionner un système du type décrit par les deux documents précités, en permettant d'utiliser l'ensemble des critères de reconnaissance rappelés ci-dessus.

A cette fin, selon l'invention, le système pour la localisation d'un mobile par rapport à un axe, comportant un détecteur photosensible disposé à poste fixe et associé à une optique observant l'environnement dudit axe dans lequel ledit mobile est susceptible de se déplacer, ainsi qu'un émetteur optique lié audit mobile et engendrant des éclats lumineux, des moyens de synchronisation étant prévus entre ledit détecteur photosensible et ledit émetteur optique, est caractérisé :
- en ce que ledit détecteur photosensible comporte, d'une part, une matrice fixe d'éléments photosensibles commandables, et, d'autre part, des moyens électroniques de commande desdits éléments photosensibles ; et
- en ce que lesdits moyens électroniques de commande, qui délivrent des impulsions de commande déclenchant des prises d'image, sont synchronisés avec lesdits éclats lumineux, de sorte que lesdites impulsions de commande recouvrent temporellement la totalité desdits éclats lumineux.

Ainsi, dans le système conforme à la présente invention, le détecteur photosensible n'est pas du type continu, mais au contraire du type à fonctionnement discontinu. Les moyens de synchronisation ont alors pour objet de synchroniser les prises d'image avec les éclats lumineux de la balise. De plus, la synchronisation :
- se fait par asservissement du détecteur photosensible par la balise ;
- peut ne pas être périodique, de sorte que le missile est alors moins détectable par les défenses ennemies.

La position du mobile par rapport audit axe est donnée par la position du ou des éléments photosensibles de la matrice, excités par l'image des éclats lumineux par rapport audit axe. On est donc affranchi de la poursuite du mobile au moyen d'un détecteur optique orientable et des capteurs liés à l'orientation dudit détecteur optique.

Par ailleurs, puisque le fonctionnement du système selon l'invention est impulsionnel et non pas continu, on peut obtenir un rapport signal/bruit particulièrement élevé. En effet, grâce à l'invention, il est possible de réaliser des prises d'images d'une durée égale à celle des éclats source et qui sont synchronisées en fréquence et en phase avec l'émission lumineuse.

Ainsi, la synchronisation de la source du détecteur et de la source permet de faire fonctionner ledit détecteur avec un niveau de signal utile voisin de la valeur crête de la puissance de l'émetteur.

La liaison peut donc fonctionner avec un rapport signal/bruit élevé, pour une puissance moyenne faible, ce qui permet de limiter la consommation et le coût de la source.

Afin d'améliorer encore les informations de position fournies par ledit détecteur optique, une impulsion temporelle additionnelle précédant et/ou suivant de près chacune des impulsions temporelles de localisation correspondant à un éclat permet de déclencher une prise de vue de référence dans les mêmes conditions que celle synchronisée sur l'éclat.

Le système comporte des moyens pour comparer les informations fournies par ladite matrice pour chaque couple d'une impulsion de localisation et d'une impulsion additionnelle associées. Ainsi, l'impulsion additionnelle permet d'établir une image de référence du champ dans lequel se déplace le missile et la comparaison de ces informations permet d'éliminer les sources parasites éventuellement présentes dans ce champ.

Une telle comparaison permet de plus de compenser automatiquement les défauts du détecteur optique, tels que niveau d'obscurité, bruit spatial, points singuliers, mauvais transferts, manque d'uniformité de réponse, etc... Elle permet donc de réduire les exigences de qualité du détecteur et d'obtenir un fonctionnement à haute température sans compensation de gain.

Il est avantageux que les éléments photosensibles soient du type à transfert de charge, généralement désignés par l'abréviation CCD, dont le signal de sortie échantillonné est particulièrement adapté au traitement numérique.

On remarquera que l'émetteur optique engendrant des éclats lumineux et lié au mobile peut être une balise lumineuse ou bien un simple miroir recevant des éclats lumineux d'une balise fixe et renvoyant lesdits éclats vers le détecteur optique.

La synchronisation entre le détecteur optique et l'émetteur optique peut être obtenue par des moyens de liaison permanente ou bien par des moyens de liaison temporaire, lesdits détecteur et émetteur optiques comportant alors des moyens (base de temps), pour maintenir individuellement ladite synchronisation.

Les éclats lumineux, et donc les impulsions de commande desdits moyens électroniques de commande des éléments photosensibles, peuvent se répéter de façon périodique ou selon toute autre loi désirée. Cependant, afin de réaliser un codage en fréquence et en phase de la liaison et d'obtenir une protection vis-à-vis de brouilleurs naturels ou artificiels, les déclenchements de l'émetteur et du détecteur optiques peuvent être réalisés de manière aléatoire ou pseudo-aléatoire.

On remarquera que le système selon l'invention fonctionnant à rapport signal/bruit élevé, il est possible de se limiter à un traitement simple de l'image donnée par la matrice d'éléments photosensibles, tout en conservant une bonne immunité vis-à-vis des brouilleurs naturels ou artificiels éventuels.

On remarquera, de plus, que le système selon l'invention peut localiser plusieurs mobiles simultanément, à condition que les éclats provenant de ceux-ci soient discriminés temporellement. Le système selon l'invention permet donc la réalisation d'une écartométrie multimobiles.

Les figures du dessin annexé feront bien comprendre comment l'invention peut être réalisée. Sur ces figures, des références identiques désignent des éléments identiques.

La figure 1 est une vue schématique illustrant le système de localisation selon l'invention.

La figure 2 est une vue schématique de face de la matrice d'éléments photosensibles utilisée dans le système de la figure 1.

Les figures 3a et 3b illustrent le fonctionnement du système de la figure 1 en fonction du temps t.

La figure 4 est le schéma synoptique d'un mode de réalisation du sytème de la figure 1.

La figure 5 montre une variante de réalisation apportée au système de la figure 4.

Les figures 6a et 6b illustrent le fonctionnement de la variante de réalisation de la figure 5 en fonction du temps t.

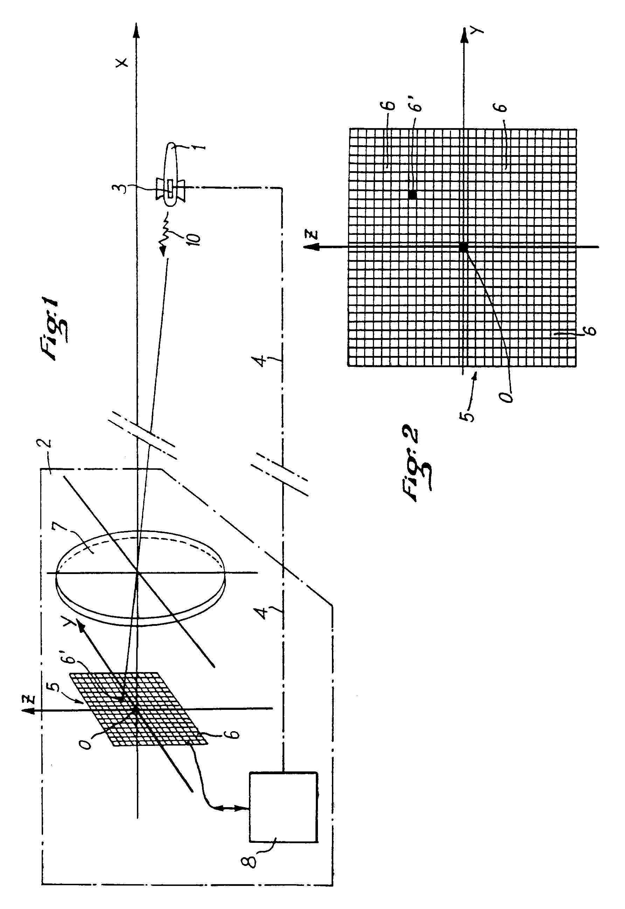

Le mode de réalisation du système de localisation, conforme à l'invention et montré par la figure 1, est destiné à permettre de connaître en continu la position d'un missile 1, par rapport à un axe OX qui, par exemple, représente la ligne de visée d'un système d'arme anti-char (non représenté) équipé dudit dispositif de localisation.

Le système de localisation est essentiellement constitué d'un détecteur optique 2 arrangé à poste fixe, par exemple dans ledit système d'arme, d'un émetteur ou balise lumineuse impulsionnelle 3 portée par ledit missile 1, ainsi que d'une liaison de synchronisation 4 reliant le détecteur fixe 2 et la balise mobile 3.

Le détecteur fixe 2 comporte essentiellement une matrice 5 d'éléments photosensibles 6, par exemple du type CCD à transfert de charge, une optique 7 et des circuits électroniques 8 pour la mise en oeuvre de la matrice 5.

Dans la matrice 5, les éléments photosensibles sont disposés en un agencement coplanaire de lignes et de colonnes, respectivement parallèles à un axe OY et à un axe OZ. Le point O est par exemple le centre de la matrice 5 et les axes OX,OY et OZ forment un système d'axes rectangulaires dont l'axe OX est orthogonal au plan de la matrice 5, alors que les axes OY et OZ sont coplanaires à ladite matrice.

L'optique 7 est susceptible de former sur la matrice 5 l'image de l'espace entourant l'axe OX.

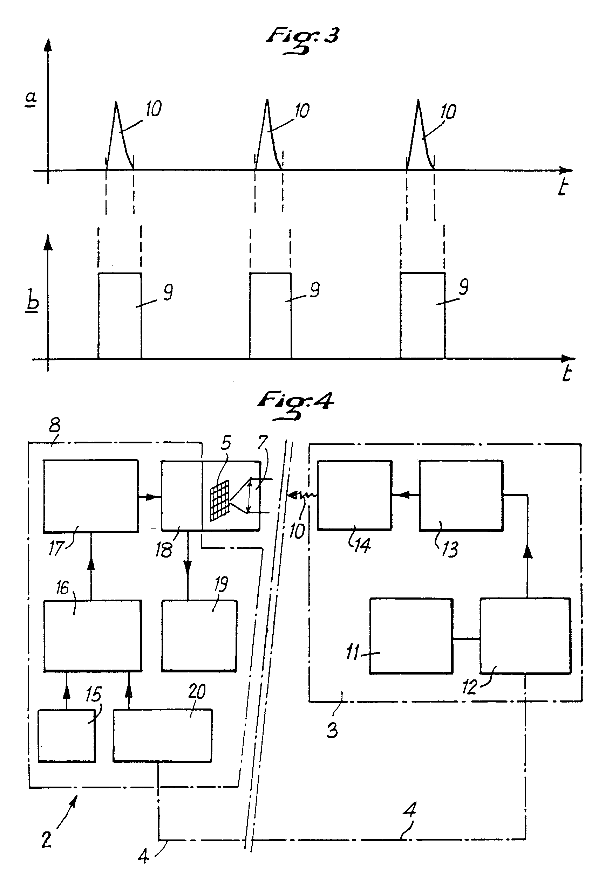

Les circuits électroniques 8 permettent de lire les charges engendrées par les éléments photosensibles 6 pendant des impulsions temporelles 9 (voir la figure 3b), c'est-à-dire de réaliser des prises d'images successives de l'espace environnant l'axe OX. La durée d'exposition de la matrice 5, c'est-à-dire la durée desdites impulsions temporelles 9 et desdites prises d'images, est courte et correspond au temps d'intégration des photons sur les zones sensibles des éléments 6. Elle peut être de l'ordre de 50 microsecondes.

Les impulsions 9 peuvent être périodiques ; cependant, leurs instants d'apparition peuvent ne pas être temporellement équidistants, de sorte que lesdites impulsions apparaissent selon une loi temporelle différente de la périodicité ou bien encore de façon aléatoire.

La balise lumineuse 3 comporte une source impulsionnelle susceptible d'émettre des éclats 10 de lumière visible ou infrarouge. Par exemple, cette source est une lampe au xénon pourvue d'une optique de concentration, ou bien encore un générateur ou une diode laser avec ou sans optique.

Les éclats 10 ont une courte durée, par exemple de l'ordre de 20 microsecondes.

De préférence, ladite source impulsionnelle est équipée d'un filtre de faible largeur spectrale, limitant le rayonnement de la balise 3. De même, un filtre identique est alors associé à l'optique 7 du détecteur 2, de façon à éliminer le rayonnement extérieur à la bande d'émission de la balise 3 et à permettre des séparations spectrales éventuellement souhaitables.

Grâce à la liaison de synchronisation 4, l'émission des éclats 10 par la balise 3 est synchronisée avec les prises d'image effectuées par la matrice 5, déclenchée par les circuits 8. Ceci est illustré par les figures 3a et 3b qui montrent que les impulsions temporelles 9 sont synchronisées avec les éclats 10. De plus, la durée de chaque impulsion temporelle 9 est au moins égale à celle des éclats 10 de façon que chaque éclat soit entièrement recouvert temporellement par une impulsion 9.

La liaison de synchronisation 4 entre le détecteur 2 et la balise 3 peut être permanente, par exemple sous la forme d'un fil déroulable ou d'une liaison hertzienne ou optique. Elle peut être également temporaire : dans ce cas, le détecteur 2 et la balise 3 comportent des horloges stables susceptibles de maintenir la synchronisation des impulsions 9 de prises d'images et des éclats 10 pendant tout le vol dudit missile.

Ainsi, à chaque fois qu'un éclat 10 est émis par la balise 3, le détecteur 2 est actif, de sorte que cet éclat frappe au moins un élément 6' de la matrice 5. Cet élément 6' excité constitue donc l'image de l'éclat 10 vue par le détecteur 2. Puisque l'éclat 10 est lié au missile 1, les coordonnées de l'élément 6' excité par rapport aux axes OY et OZ sont caractéristiques de la position dudit missile 1 par rapport à l'axe OX.

A partir des coordonnées dudit élément 6' excité, les circuits 8 peuvent élaborer un signal représentatif de ladite position et éventuellement destiné à corriger la trajectoire dudit missile.

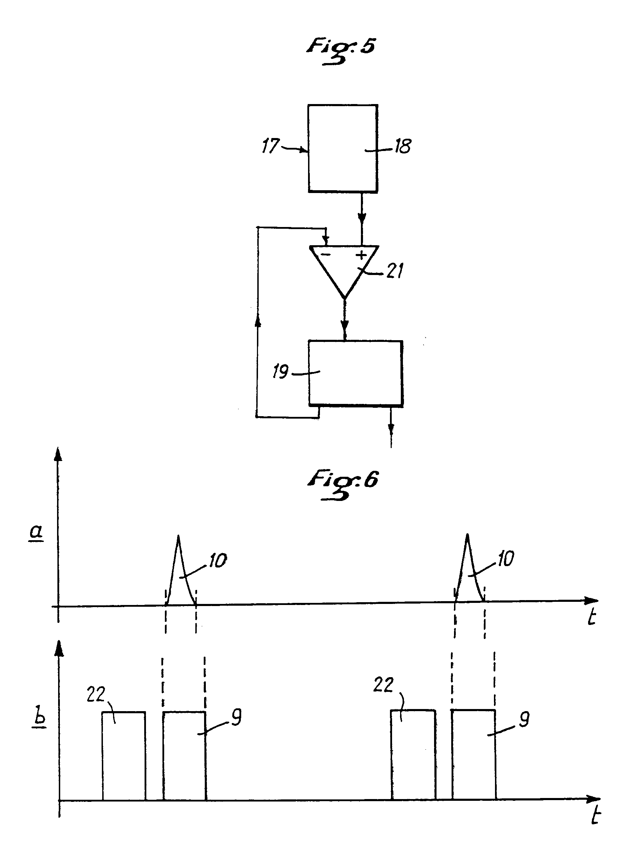

Sur la figure 4, on a représenté schématiquement un mode de réalisation du système selon l'invention. On peut y voir que l'émetteur optique 3 comporte une base de temps 11 alimentant un séquenceur 12, commandant un dispositif électronique de déclenchement 13, qui, lui-même commande la source lumineuse 14 émettant les éclats 10. Les circuits électroniques de commande du détecteur optique 2 comportent une base de temps 15 reliée à un processeur 16, activant un séquenceur 17 d'acquisition d'images. Le séquenceur 17 commande un dispositif 18 de mise en oeuvre électronique de la matrice 5 et est associé à une memoire d'images 19. Un dispositif d'interface 20 permet d'assurer la synchronisation entre l'émetteur optique 3 et le détecteur optique 2, par l'intermédiaire de la liaison de synchronisation 4.

Comme montré par la figure 5, entre le dispositif électronique 18 de mise en oeuvre de la matrice 5 et la mémoire d'images 19, on peut interposer un comparateur 21. Le fonctionnement du système selon l'invention est alors illustré par la figure 6. On peut y voir qu'à chaque impulsion temporelle 9 de prise de vue d'un éclat 10 est associée une impulsion temporelle 22 de prise de vue, décalée par rapport auxdits éclats 10. Ainsi, les impulsions 22 de commande de la matrice 5 correspondent à des prises de vue du champ dans lequel se déplace le missile 1. Par suite, le comparateur 21 délivre à sa sortie un signal correspondant uniquement à un éclat 11, le fond du champ étant éliminé du fait que, à chaque fois, on soustrait le signal de prise de vue correspondant à une impulsion 22 du signal de prise de vue correspondant à l'impulsion 9 associée.

Le signal emmagasiné dans la mémoire 19 après l'impulsion 9 ne contient donc que les informations concernant l'éclat 10 correspondant. La localisation du missile 1 peut donc être particulièrement précise.

## Revendications

1. Système pour la localisation d'un mobile (1) par rapport à un axe (OX), comportant un détecteur photosensible (2) disposé à poste fixe et associé à une optique (7) observant l'environnement dudit axe dans lequel ledit mobile (1) est susceptible de se déplacer, ainsi qu'un émetteur optique (3) lié audit mobile (1) et engendrant des éclats lumineux (10), des moyens de synchronisation (4) étant prévus entre ledit détecteur photosensible et ledit émetteur optique, caractérisé :
- en ce que ledit détecteur photosensible (2) comporte, d'une part, une matrice fixe (5) d'éléments photosensibles commandables (6), et, d'autre part, des moyens électroniques (8) de commande desdits éléments photosensibles (6) ; et
- en ce que lesdits moyens électroniques de commande (8), qui délivrent des impulsions de commande (9) déclenchant des prises d'image, sont synchronisés avec lesdits éclats lumineux (10), de sorte que lesdites impulsions de commande (9) recouvrent temporellement la totalité desdits éclats lumineux (10).

2. Système selon la revendication 1,
caractérisé en ce que, à chaque impulsion de commande (9), est associée une impulsion de commande additionnelle (22) temporellement proche et se produisant en dehors de tout éclat lumineux (10) et en ce que on prévoit des moyens (21) pour comparer les signaux électriques fournis par ladite matrice (5) lors d'une impulsion de commande (9) et lors de l'impulsion de commande additionnelle associée (22).

3. Système selon l'une quelconque des revendications 1 ou 2,
caractérisé en ce que lesdits éléments photosensibles (6) sont du type à transfert de charge.

4. Système selon l'une quelconque des revendications 1 à 3,
caractérisé en ce que la synchronisation entre ledit émetteur optique (3) et ledit détecteur optique (2) est obtenue par une liaison permanente.

5. Système selon l'une quelconque des revendications 1 à 3,
caractérisé en ce que la synchronisation entre ledit émetteur optique (3) et ledit détecteur optique (2) est obtenue par des moyens de liaison temporaire et en ce que l'on prévoit des moyens pour maintenir ladite synchronisation après rupture de ladite liaison temporaire.

6. Système selon l'une quelconque des revendications 1 à 5,
caractérisé en ce que lesdits éclats lumineux (10) sont périodiques.

7. Système selon l'une quelconque des revendications 1 à 5,
caractérisé en ce que les éclats lumineux (10) apparaissent à des instants pseudo-aléatoires.

## Claims

1. System for finding the position of a moving object (1) in relation to an axis (OX), including a photosensitive detector (2) disposed at a fixed station and associated with an optical system (7) observing the environment of said axis in which said moving object (1) is capable of moving, as well as an optical emitter (3) linked to said moving object (1) and generating light flashes (10), synchronisation means (4) being provided between said photosensitive detector and said optical emitter, characterised:
- in that said photosensitive detector (2) includes, on the one hand, a fixed matrix (5) of commandable photosensitive elements (6) and, on the other hand, electronic means (8) for commanding said photosensitive elements (6); and
- in that said electronic command means (8), which deliver command pulses (9) initiating image recordings, are synchronised with said light flashes (10), so that said command pulses (9) temporally cover the totality of said light flashes (10).

2. System according to claim 1, characterised in that with each command pulse (9) there is associated an additional command pulse (22) which is temporally close and which occurs outside any light flash (10), and in that means (21) are provided for comparing the electrical signals supplied by said matrix (5) on the occasion of a command pulse (9) and on the occasion of the associated additional command pulse (22).

3. System according to either one of claims 1 or 2, characterised in that said photosensitive elements (6) are of the charge transfer type.

4. System according to any one of claims 1 to 3, characterized in that the synchronisation between said optical emitter (3) and said optical detector (2) is obtained by a permanent link.

5. System according to any one of claims 1 to 3, characterized in that the synchronisation between said optical emitter (3) and said optical detector (2) is obtained by means for temporary linking, and in that means are provided for maintaining said synchronisation after rupture of said temporary link.

6. System according to any one of claims 1 to 5, characterised in that said light flashes (10) are periodic.

7. System according to any one of claims 1 to 5, characterized in that the light flashes (10) appear at pseudo-random instants.

## Patentansprüche

1. System zur Lokalisierung eines beweglichen Objekts (1) bezüglich einer Achse (OX) mit einem feststehenden photoempfindlichen Empfänger (2), der einer die Umgebung der Achse, in der das bewegliche Objekt (1) sich verschiebt, beobachtenden Optik (7) zugeordnet ist, und mit einem mit dem beweglichen Objekt (1) verbundenen, Blinksignale (10) erzeugenden optischen Sender (3), wobei Synchronisiermittel (4) zwischen dem photoempfindlichen Empfänger und dem optischen Sender vorgesehen sind,
dadurch gekennzeichnet, daß der photoempfindliche Empfänger (2) einerseits eine feste Matrize (5) von steuerbaren photoempfindlichen Elementen (6) und andererseits elektronische Steuermittel (8) für die photoempfindlichen Elemente (6) aufweist, und
daß die elektronischen Steuermittel (8), die Steuerimpulse (9) zur Auslösung von Bildaufnahmen aussenden, mit den Blinksignalen (10) synchronisiert sind, sodaß die Steuerimpulse (9) die Gesamtheit der Blinksignale (10) zeitlich abdecken.

2. System nach Anspruch 1,
dadurch gekennzeichnet, daß jedem Steuerimpuls (9) ein zeitlich naher, zusätzlicher Steuerimpuls (22) zugeordnet ist, der außerhalb jeglichen Blinksignals (10) entsteht, und daß Mittel (21) zum Vergleichen der von der Matrize (5) bei einem Steuerimpuls (9) und bei einem zugeordneten zusätzlichen Steuerimpuls (22) gelieferten elektrischen Signale vorgesehen sind.

3. System nach einem der Ansprüche 1 oder 2,
dadurch gekennzeichnet, daß die photoempfindlichen Elemente (6) vom Ladungsübertragungstyp sind.

4. System nach einem der Ansprüche 1 bis 3,
dadurch gekennzeichnet, daß die Synchronisation zwischen dem optischen Sender (3) und dem optischen Empfänger (2) durch eine permanente Verbindung erzielt wird.

5. System nach einem der Ansprüche 1 bis 3,
dadurch gekennzeichnet, daß die Synchronisation zwischen dem optischen Sender (3) und dem optischen Empfänger (2) durch temporäre Verbindungsmittel erzielt wird, und daß Mittel zum Aufrechterhalten der Synchronisation nach Unterbrechung der temporären Verbindung vorgesehen sind.

6. System nach einem der Ansprüche 1 bis 5,
dadurch gekennzeichnet, daß die Blinksignale (10) periodisch sind.

7. System nach einem der Ansprüche 1 bis 5,
dadurch gekennzeichnet, daß die Blinksignale (10) an pseudo-zufälligen Zeitpunkten erscheinen.
